# EUROPÄISCHE PATENTSCHRIFT

(11) **EP 2 570 016 B1**
(45) Veröffentlichungstag und Bekanntmachung des Hinweises auf die Patenterteilung: **11.03.2015**
(21) Anmeldenummer: 12006410.0
(22) Anmeldetag: 12.09.2012
(51) Int. Cl.: A01C 7/08

(54) **Pneumatische Verteilmaschine**
Pneumatic distribution machine
Machine de répartition pneumatique

(30) Priorität: 19.09.2011 DE 102011113577
(43) Veröffentlichungstag der Anmeldung: 20.03.2013
(73) Patentinhaber: RAUCH Landmaschinenfabrik GmbH, 76547 Sinzheim (DE)
(72) Erfinder: Boos, Florian, 76547 Sinzheim (DE); Schickinger, Manfred, 76547 Sinzheim (DE); Klein, Frédéric, 67000 Strasbourg (FR); Gotzen, Christian, 41751 Viersen (DE)
(74) Vertreter: Lenz, Steffen

(56) Entgegenhaltungen:
- EP-A1- 0 873 676
- CA-A1- 2 461 771
- DE-U1-202004 002 923

## Beschreibung

Die Erfindung betrifft eine pneumatische Verteilmaschine für Streugut, wie Saatgut, Dünger oder dergleichen, mit einem Förderrohr, dem das Streugut dosiert zuführbar ist, einem daran über einen etwa 90°-Krümmer anschließenden, als Wellrohr ausgebildeten Steigrohr, und einem an dessen oberen Ende angeordneten Verteilerkopf mit etwa radial abgehenden, zum Boden geführten Schlauchleitungen zur flächigen Verteilung des Streugutes, wobei an der äußeren Innenwand des Krümmers ein Leitelement zur Führung des Förderstroms in Richtung zur Mitte des Krümmers angeordnet ist.

Pneumatische Verteilmaschinen des vorgenannten Aufbaus haben sich in der Landwirtschaft vor allem bei großen Arbeitsbreiten durchgesetzt. Im Falle einer Sämaschine wird das Saatgut über die Schlauchleitung zu einem Säschar geführt, im Falle von Dünger befindet sich am Ende der Schlauchleitung ein Verteilorgan, das den Dünger entweder flächig verteilt oder mittels entsprechender Organe in den Erdboden einbringt.

Nachteile ergeben sich hinsichtlich einer präzisen Querverteilung im Verteilerkopf. Dies ist auch nicht anders zu erwarten, wird doch der gesamte Saatgut-/Düngerstrom zentral dosiert und dann in der Regel nach mindestens eine Rohrkrümmung von unten einem Verteilerkopf mit bis zu 48 Ausgängen (Schlauchleitungen) zugeführt. Zur Optimierung und Verwirbelung des Saatgutes/Düngers haben sich sogenannte Wellrohre bewährt, die vor bzw. stromauf dem Verteilerkopf eingebaut sind. Je nach den herrschenden Reflexionsvorgängen aufgrund verschiedener Saatgüter, Saatgutmengen, Luftströmungsgeschwindigkeiten etc. ergeben sich deshalb ungleichmäßige Saatgutmengen pro Schar an deren Austrittsenden.

Dies wird vor allem dadurch unterstützt, dass das Saatgut im Bereich des Rohrkrümmers aus dem Luftstrom abgeschieden und entlang der Krümmerwandung transportiert wird. Dem hat man dadurch vorzubeugen versucht (EP 0 873 675 und EP 0 873 676), dass in die Rohrkrümmung ein rundes Rohr kleineren Durchmessers eingesetzt ist. Hier können sich jedoch die Saatgut- oder Düngerkörner in den Ritzen zum Außenbogen hin verklemmen und anreichern. Darüber hinaus haben Versuche gezeigt, dass derartige Rundrohre die Verteilung im Vergleich zu nicht eingebauten Leitelementen eher verschlechtern.

Die Aufgabe der Erfindung besteht darin, ein Leitelement für den Krümmer einer pneumatischen Verteilmaschine der eingangs genannten Art vorzuschlagen, das bei unterschiedlichen Saatgütern, Düngern, Saat- und Düngermengen, verschiedenen Luftgeschwindigkeiten etc. eine optimale Verteilung im Verteilerkopf auf alle Schlauchleitungen unabhängig von deren Anzahl sicherstellt.

Diese Aufgabe wird erfindungsgemäß dadurch gelöst, dass das Leitelement ein sich an die Wandung des Krümmers anschmiegendes, den Raum zwischen sich und der Krümmerwand verschließendes Formstück ist.

Das Formstück, das den Raum zwischen sich und der Krümmerwandung verschließt, leitet den Förderstrom zur Krümmermitte hin und vermag einer Anreicherung von Streugut im Bereich des Krümmers dadurch entgegenzuwirken, dass es sich an die Wandung des Krümmers anschmiegt. Das Formstück ist hierbei an seiner dem Krümmerinneren zugekehrten Oberfläche entsprechend strömungsgünstig ausgebildet.

Wie bereits angedeutet, erstreckt sich das dem mit dem erfindungsgemäßen Formstück versehenen Krümmer vorgeordnete Förderrohr üblicherweise etwa horizontal, so dass das dem Krümmer nachgeordnete Steigrohr etwa vertikal angeordnet ist und von unten in den Verteilerkopf mündet.

In vorteilhafter Ausgestaltung ist vorgesehen, dass das Formstück etwa am Scheitel des Krümmers oder zwischen diesem und dem abgangsseitigen Ende des Krümmers ansetzt und bis zu dessen Abgangsseite reicht. Die eingangsseitig in den Krümmer eintretenden Streugutpartikel werden folglich zunächst an der Außenwandung des Krümmers entlang geleitet, bis sich auf das Formstück auftreffen, um hiervon, insbesondere vornehmlich radial, reflektiert und gleichmäßig im Querschnitt des Krümmers bzw. des an diesen anschließenden Steigrohres verteilt werden zu können.

Zu diesem Zweck hat es sich ferner als vorteilhaft erwiesen, wenn das Formstück abgangsseitig bis etwa zur Mitte des Querschnittes des Krümmers reicht, d.h. es verkleinert den Querschnitt des abgangsseitigen Querschnittes des Krümmers zumindest partiell, insbesondere auf der dem Förderrohr abgewandten Seite des abgangsseitigen Querschnittes, an welchem sich andernfalls (ohne Formstück) aufgrund Umlenkung in dem Krümmer das meiste Streugut befände.

Der Querschnitt des Formstückes weist vorzugsweise zumindest am abgangsseitigen Ende des Krümmers eine zentrale Rundung mit hieran beidseitig anschließender Heranführung an die Innenwand des Krümmers aufweist, wobei die Rundung zur möglichst gleichmäßigen Reflexion des geförderten Streugutes von der Rundung fort dient. Die beidseitig an die Rundung anschließenden Heranführungen laufen vorzugsweise im Wesentlichen radial auf die Innenwand des Krümmers zu, d.h. sie münden etwa senkrecht zum Umfang des Krümmers in dessen Innenwand ein, so dass Hinterschneidungen oder Ritzen, welche eine Anreicherung von Streugut bewirken könnten, vermieden werden und eine gleichmäßige Streugutverteilung über den Rohrquerschnitt gewährleistet ist.

Die beidseitig an die Rundung anschließenden Heranführungen können insbesondere eine zumindest abschnittsweise lineare und/oder entgegen der Krümmung der Rundung gekrümmte Erstreckung besitzen, wobei sie vorzugsweise mit ihrem linearen Abschnitt auf die Wandung des Krümmers zulaufen und ihr gekrümmter Abschnitt die zentrale Rundung mit den Heranführungen verbindet.

In strömungstechnischer Hinsicht hat es sich ferner als vorteilhaft erwiesen, wenn die Heranführungen unter einem Winkel zwischen 90° und 180°, insbesondere unter einem Winkel zwischen 100° und 150°, vorzugsweise unter einem Winkel von etwa 120°, angeordnet sind.

Die Rundung des Querschnittes des Formstücks kann insbesondere konvex ausgebildet sein, so dass sie in Richtung der über das Förderrohr in den Krümmer eintretenden Streugutpartikel vorsteht und sich radial von der Krümmung fort reflektiert.

In weiterhin vorteilhafter Ausgestaltung kann vorgesehen sein, dass sich die Form des Formstücks von dem abgangsseitigen Ende des Krümmers im Wesentlichen senkrecht zum abgangsseitigen Querschnitt des Krümmers in den Krümmer hinein fortsetzt und im Krümmer ausläuft. Hierbei kann insbesondere zumindest die Scheitellinie der Rundung des Querschnittes des Formstücks im Wesentlichen senkrecht zu dem Förderrohr angeordnet sein, so dass sich die Querschnittsform des Formstückes im Bereich des abgangsseitigen, dem Steigrohr zugewandten Querschnitt des Krümmers folglich im Wesentlichen vertikal nach unten, insbesondere bis zum Scheitel des Krümmers oder oberhalb desselben, fortsetzt und die Scheitellinie der Rundung eine im Wesentlichen vertikale Staulinie für das aus dem Förderrohr in den Krümmer eintretende Streugut bildet.

Die Rundung des Formstücks kann zweckmäßigerweise einen Radius zwischen 20 mm und 50 mm, vorzugsweise zwischen 25 mm und 45 mm, insbesondere zwischen 30 mm und 40 mm, beispielsweise von ca. 35 mm, aufweisen.

Ein Übergangsbereich zwischen der Rundung und den Heranführungen des Querschnittes des Formstücks kann einen - insbesondere demgegenüber kleineren - Radius zwischen 10 mm und 30 mm, vorzugsweise zwischen 15 mm und 25 mm, insbesondere von ca. 20 mm, aufweisen.

Das Formstück kann ferner an seinem ausgangsseitigen Ende des Krümmers vorzugsweise geschlossen ausgebildet sein, so dass der zwischen der Krümmerwand und dem Formstück gebildete Hohlraum gänzlich abgeschlossen ist und in diesen keine Streugutpartikel hineingelangen können.

Darüber hinaus kann das Formstück in bevorzugter Ausgestaltung auswechselbar, insbesondere mittels Schrauben, insbesondere an der Krümmerwand, befestigt sein, so dass es insbesondere möglich ist, für verschiedene Durchmesser des Krümmers verschiedene Formstücke in entsprechender Gestaltung mit an die unterschiedlichen Krümmerdurchmesser angepassten Abmessungen einzusetzen.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Teilansicht einer pneumatischen Verteilmaschine;
- Fig. 2: eine schematische perspektivische Ansicht eines Rohrkrümmers mit einer hierin eingesetzten Ausführungsform eines erfindungsgemäßen Formstücks;
- Fig. 3: eine Seitenansicht des Krümmers mit eingesetztem Formstück gemäß Fig. 2;
- Fig. 4: eine Draufsicht auf das abgangsseitige Ende des Krümmers mit eingesetztem Formstück gemäß Fig. 2 und 3, d.h. in Bezug auf Fig. 3 von links betrachtet und um 180° um eine horizontale Achse gedreht; und
- Fig. 5: eine Draufsicht auf das eingangsseitige Ende des Krümmers mit eingesetztem Formstück gemäß Fig. 2 bis 4, d.h. in Bezug auf Fig. 3 von unten betrachtet.

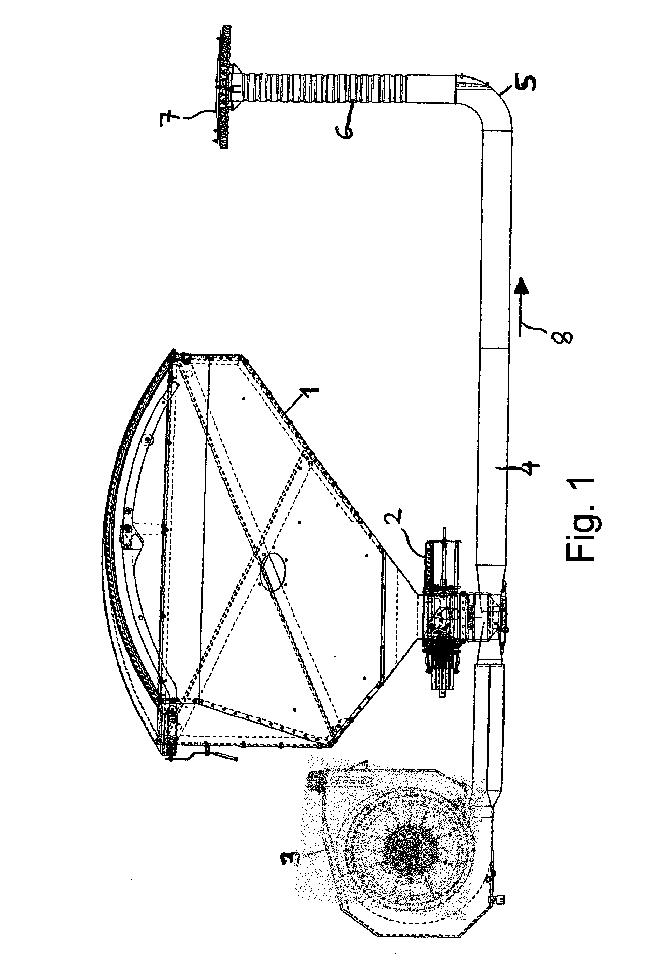

In Fig. 1 sind die wesentlichen Bestandteile einer pneumatischen Verteilmaschine zum Ausbringen von Streugut, wie Saatgut oder Dünger, schematisch wiedergegeben. Ein Behälter 1 dient zur Aufnahme des Streugutes, wobei letzteres aus dem Behälter 1 über ein Dosierorgan 2 am Behälterboden entnommen wird. Stromab des Dosierorgans 2 gelangt das dosierte Streugut in einen von einem Gebläse 3 erzeugten Förderstrom in einem Förderrohr 4. Das Luft-/Gutgemisch gelangt über das im Wesentlichen horizontale Förderrohr 4 über einen sich um etwa 90° erstreckenden Krümmer 5 in ein vertikales Steigrohr 6. Das Steigrohr 6 ist als Wellrohr ausgebildet, um für eine möglichst intensive Verwirbelung von Förderluft und Streugut zu sorgen.

Am oberen Ende des Steigrohres 6 ist ein Verteilerkopf 7 angeordnet, an den etwa radial abgehende Schlauchleitungen (nicht gezeigt) angeschlossen sind. Jede Schlauchleitung führt im Falle einer Sämaschine zu einem Säschar, im Falle eines Düngerstreuers zu einem Verteilorgan oder Organ für die Tiefenablage (ebenfalls nicht gezeigt).

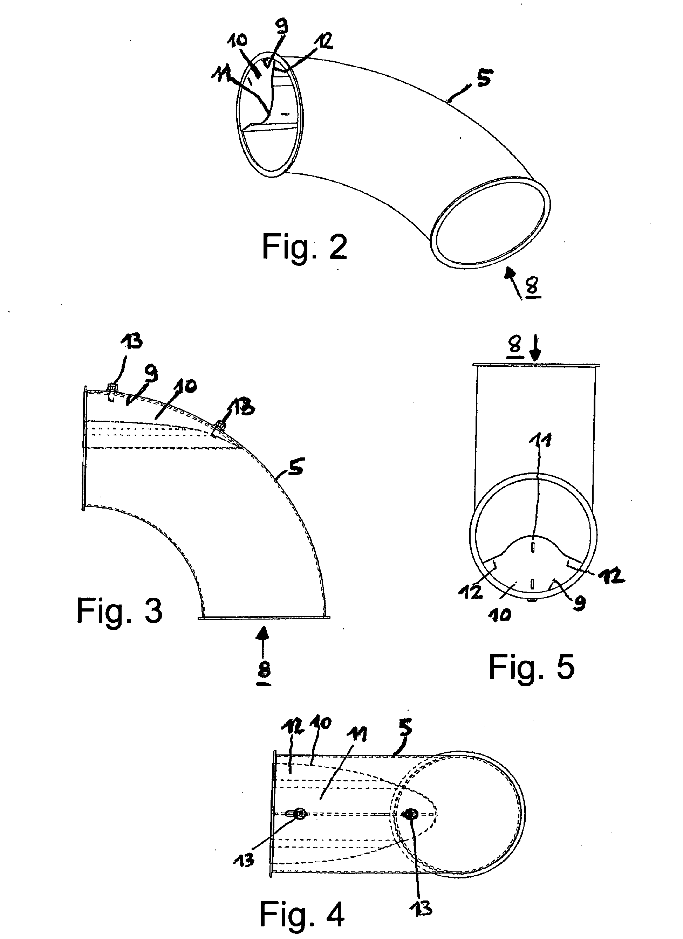

Im Bereich der Innenseite der äußeren Wandung des Krümmers 5 neigt das Streugut zum Abscheiden aus dem in Richtung des Pfeils 8 bewegten Förderluftstrom. Um das zu verhindern und den Teilchenstrom in der Mitte des Krümmers 5 zu halten bzw. in die Mitte zu lenken und von dort dem Steigrohr 6 zuzuführen, ist an der Innenwand 9 des Rohrkrümmers ein Formstück 10 eingesetzt, das den Raum zwischen sich und der Innenwand des Rohrkrümmers verschließt (vgl. insbesondere Fig. 2 bis 4). Das Formstück 10 kann beispielsweise einteilig, z.B. aus einem Kunststoff, hergestellt sein. Es weist auf seiner dem Krümmerinneren, dem eingangsseitigen Förderrohr 4 zugekehrten Oberfläche ein strömungsförderndes Profil auf. Es weist hierzu beispielsweise einen zentralen, konvex gekrümmten Bereich 11 mit einem - gegenüber dem Radius des Krümmers 5 bzw. des Förderrohres 4 und des Steigrohres 6 kleineren - Radius von ca. 35 mm mit hieran nach außen anschließenden Heranführungen 12 mit weichen Übergängen mit einem Radius von etwa 20 mm auf, welche an ihren äußeren, dem gekrümmten Bereich 11 abgewandten Enden z.B. in einen etwa linearen Verlauf übergehen und etwa radial an die Krümmerwand 9 anschließen. Die etwa radial in die Wandung des Krümmers 5 mündenden Heranführungen 12 schließen zwischen sich einen Winkel von etwa 120° ein, so dass das Formstück 10 an dem ausgangsseitigen (dem Steigrohr 6 zugewandten) Querschnitt des Krümmers 5 grob ein Drittel dieses Querschnittes in seinem dem Förderrohr 4 abgewandten Bereich verschließt. Der gekrümmte Bereich 11 erstreckt sich hierbei am ausgangsseitigen (dem Steigrohr 6 zugewandten) Querschnitt des Krümmers 5 bis etwa zum Mittelpunkt des Querschnittes des Krümmers 5 und läuft etwa senkrecht zur Erstreckungsrichtung des Förderrohres 4 bzw. parallel zu der des Steigrohres 6 an der äußeren Wandung des Krümmers 5 aus.

Das Profil des Formstücks 10 erstreckt sich folglich von dem dem Steigrohr 6 zugewandten Querschnitt des Krümmers 5 nach unten in den Krümmer 5 hinein, wie es insbesondere aus Fig. 3 und 4 ersichtlich ist, beim vorliegenden Ausführungsbeispiel bis knapp oberhalb des Scheitels des Krümmers 5. Die Scheitellinie des konvex gekrümmten Bereichs 11 ist folglich etwa senkrecht zur Ersteckungsrichtung des Förderrohres 4 angeordnet, so dass es eine vertikale Staulinie bildet, welche das auftreffende Streugut nach innen, in den dem Förderrohr 4 zugewandten Querschnittsbereich des Krümmers 5 reflektiert, wo andernfalls eine Verarmung an Streugut aufträte, welche zu eine sehr inhomogenen Weiterleitung des Streugutes in das Steigrohr 6 resultierte.

Das Formstück 10 kann beispielsweise mittels von der Außenseite des Krümmers 5 eingreifenden Schrauben 13 oder dergleichen an diesem auswechselbar bzw. austauschbar befestigt sein.

## Patentansprüche

1. Pneumatische Verteilmaschine für Streugut, wie Saatgut, Dünger oder dergleichen, mit einem Förderrohr (4), dem das Streugut dosiert zuführbar ist, einem daran über einen etwa 90°-Krümmer (5) anschließenden, als Wellrohr ausgebildeten Steigrohr (6), und einem an dessen oberen Ende angeordneten Verteilerkopf (7) mit etwa radial abgehenden, zum Boden geführten Schlauchleitungen (8) zur flächigen Verteilung des Streugutes, wobei an der äußeren Innenwand (9) des Krümmers (5) ein Leitelement zur Führung des Förderstroms in Richtung zur Mitte des Krümmers (5) angeordnet ist, **dadurch gekennzeichnet, dass** das Leitelement ein sich an die Wandung (9) des Krümmers (5) anschmiegendes, den Raum zwischen sich und der Wandung (9) des Krümmers (5) verschließendes Formstück (10) ist.

2. Pneumatische Verteilmaschine nach Anspruch 1, **dadurch gekennzeichnet, dass** sich das Förderrohr (4) etwa horizontal erstreckt.

3. Pneumatische Verteilmaschine nach Anspruch 1 oder 2, **dadurch gekennzeichnet, dass** das Formstück (10) etwa am Scheitel des Krümmers (5) oder zwischen diesem und dem abgangsseitigen Ende des Krümmers (5) ansetzt und bis zu dessen Abgangsseite reicht.

4. Pneumatische Verteilmaschine nach einem der Ansprüche 1 bis 3, **dadurch gekennzeichnet, dass** das Formstück (10) abgangsseitig bis etwa zur Mitte des Querschnittes des Krümmers (5) reicht.

5. Pneumatische Verteilmaschine nach einem der Ansprüche 1 bis 4, **dadurch gekennzeichnet, dass** der Querschnitt des Formstückes (10) zumindest am abgangsseitigen Ende des Krümmers (5) eine zentrale Rundung (11) mit hieran beidseitig anschließender Heranführung (12) an die Innenwand (9) des Krümmers (5) aufweist.

6. Pneumatische Verteilmaschine nach Anspruch 5, **dadurch gekennzeichnet, dass** die beidseitig an die Rundung (11) anschließenden Heranführungen (12) im Wesentlichen radial auf die Innenwand (9) des Krümmers (5) zulaufen.

7. Pneumatische Verteilmaschine nach Anspruch 5 oder 6, **dadurch gekennzeichnet, dass** die beidseitig an die Rundung (11) anschließenden Heranführungen (12) eine zumindest abschnittsweise lineare und/oder entgegen der Krümmung der Rundung (11) gekrümmte Erstreckung besitzen.

8. Pneumatische Verteilmaschine nach einem der Ansprüche 5 bis 7, **dadurch gekennzeichnet, dass** die Heranführungen (12) unter einem Winkel zwischen 90° und 180°, insbesondere unter einem Winkel von etwa 120°, angeordnet sind.

9. Pneumatische Verteilmaschine nach einem der Ansprüche 5 bis 8, **dadurch gekennzeichnet, dass** die Rundung (11) des Querschnittes des Formstücks (10) konvex ist.

10. Pneumatische Verteilmaschine nach einem der Ansprüche 1 bis 8, **dadurch gekennzeichnet, dass** sich die Form des Formstücks (10) von dem abgangsseitigen Ende des Krümmers (5) im Wesentlichen senkrecht zum abgangsseitigen Querschnitt des Krümmers (5) in den Krümmer (5) hinein fortsetzt und im Krümmer (5) ausläuft.

11. Pneumatische Verteilmaschine nach einem der Ansprüche 5 bis 10, **dadurch gekennzeichnet, dass** zumindest die Scheitellinie der Rundung (11) des Querschnittes des Formstücks (10) im Wesentlichen senkrecht zu dem Förderrohr (4) angeordnet ist.

12. Pneumatische Verteilmaschine nach einem der Ansprüche 5 bis 11, **dadurch gekennzeichnet, dass** die Rundung (11) des Formstücks (10) einen Radius zwischen 20 mm und 50 mm, insbesondere von ca. 35 mm, aufweist.

13. Pneumatische Verteilmaschine nach einem der Ansprüche 5 bis 12, **dadurch gekennzeichnet, dass** ein Übergangsbereich zwischen der Rundung (11) und den Heranführungen (12) des Querschnittes des Formstücks (10) einen Radius zwischen 10 mm und 30 mm, insbesondere von ca. 20 mm, aufweist.

14. Pneumatische Verteilmaschine nach einem der Ansprüche 1 bis 13, **dadurch gekennzeichnet, dass** das Formstück (10) am ausgangsseitigen Ende des Krümmers (5) geschlossen ausgebildet ist.

15. Pneumatische Verteilmaschine nach einem der Ansprüche 1 bis 14, **dadurch gekennzeichnet, dass** das Formstück (10) auswechselbar, insbesondere mittels Schrauben (13), befestigt ist, wobei insbesondere für verschiedene Durchmesser des Krümmers (5) verschiedene Formstücke (10) in entsprechender Gestaltung mit an die unterschiedlichen Krümmerdurchmesser angepassten Abmessungen einsetzbar sind.

## Claims

1. Pneumatic distribution machine for spreading material, such as seeds, fertilizers or the like, with a delivery pipe (4) to which the spreading material can be supplied in a metered manner, an ascending pipe (6) which adjoins the delivery pipe via an approximately 90° elbow (5) and is in the form of a corrugated pipe, and a spreader head (7) which is arranged at the upper end of said ascending pipe and has hose lines (8), which emerge approximately radially and are guided towards the ground, for the spacious distribution of the spreading material, wherein a guiding element for guiding the delivery stream in the direction towards the centre of the elbow (5) is arranged on the outer inner wall (9) of the elbow (5), **characterized in that** the guiding element is a shaped piece (10) which fits snugly onto the wall (9) of the elbow (5) and closes the space between itself and the wall (9) of the elbow (5).

2. Pneumatic distribution machine according to Claim 1, **characterized in that** the delivery pipe (4) extends approximately horizontally.

3. Pneumatic distribution machine according to Claim 1 or 2, **characterized in that** the shaped piece (10) fits approximately on the apex of the elbow (5) or between said apex and the output-side end of the elbow (5) and extends as far as the output side of the elbow.

4. Pneumatic distribution machine according to one of Claims 1 to 3, **characterized in that** the shaped piece (10) extends on the output side approximately as far as the centre of the cross section of the elbow (5).

5. Pneumatic distribution machine according to one of Claims 1 to 4, **characterized in that** the cross section of the shaped piece (10) has, at least at the output-side end of the elbow (5), a central rounded portion (11) with an approach portion (12), which adjoins the latter on both sides, leading onto the inner wall (9) of the elbow (5).

6. Pneumatic distribution machine according to Claim 5, **characterized in that** the approach portions (12) adjoining the rounded portion (11) on both sides converge substantially radially with the inner wall (9) of the elbow (5).

7. Pneumatic distribution machine according to Claim 5 or 6, **characterized in that** the approach portions (12) adjoining the rounded portion (11) on both sides have an extent which is linear at least in sections and/or is curved counter to the curvature of the rounded portion (11).

8. Pneumatic distribution machine according to one of Claims 5 to 7, **characterized in that** the approach portions (12) are arranged at an angle of between 90° or 180°, in particular at an angle of approximately 120°.

9. Pneumatic distribution machine according to one of Claims 5 to 8, **characterized in that** the rounded portion (11) of the cross section of the shaped piece (10) is convex.

10. Pneumatic distribution machine according to one of Claims 1 to 8, **characterized in that** the shape of the shaped piece (10) from the output-side end of the elbow (5) continues into the elbow (5) substantially perpendicularly to the output-side cross section of the elbow (5) and peters out in the elbow (5).

11. Pneumatic distribution machine according to one of Claims 5 to 10, **characterized in that** at least the apex line of the rounded portion (11) of the cross section of the shaped piece (10) is arranged substantially perpendicularly to the delivery pipe (4).

12. Pneumatic distribution machine according to one of Claims 5 to 11, **characterized in that** the rounded portion (11) of the shaped piece (10) has a radius of between 20 mm and 50 mm, in particular of approx. 35 mm.

13. Pneumatic distribution machine according to one of Claims 5 to 12, **characterized in that** a transition region between the rounded portion (11) and the approach portions (12) of the cross section of the shaped piece (10) has a radius of between 10 mm and 30 mm, in particular of approx. 20 mm.

14. Pneumatic distribution machine according to one of Claims 1 to 13, **characterized in that** the shaped piece (10) is of closed design at the outlet-side end of the elbow (5).

15. Pneumatic distribution machine according to one of Claims 1 to 14, **characterized in that** the shaped piece (10) is fastened in an exchangeable manner, in particular by means of screws (13), wherein, in particular for various diameters of the elbow (5), various shaped pieces (10) in a corresponding configuration with dimensions adapted to the different elbow diameters can be used.

## Revendications

1. Épandeuse pneumatique pour une substance à épandre, par exemple des semences, de l'engrais ou similaire, avec un tuyau transporteur (4) auquel est amené la substance à épandre dosée, avec un tuyau montant (6) y étant raccordé via un coude (5) d'environ 90° et prenant la forme d'un tuyau ondulé, et avec une tête d'épandage (7) disposée au niveau de son extrémité supérieure avec des conduites flexibles (8) partant de là approximativement radialement et orientées vers le sol pour permettre un épandage étendu de la substance à épandre, un élément conducteur étant disposé au niveau de la paroi interne (9) extérieure du coude (5) pour guider le flux extrait en direction du centre du coude (5), **caractérisée en ce que** l'élément conducteur est une pièce façonnée (10) se serrant au niveau de la paroi (9) du coude (5) et fermant l'espace entre lui et la paroi (9) du coude (5).

2. Épandeuse pneumatique selon la revendication 1, **caractérisée en ce que** le tuyau transporteur (4) s'étend approximativement horizontalement.

3. Épandeuse pneumatique selon la revendication 1 ou 2, **caractérisée en ce que** la pièce façonnée (10) se positionne approximativement au niveau du sommet du coude (5) ou entre celui-ci et l'extrémité située du côté de sortie du coude (5) et s'étend jusqu'à son côté de sortie.

4. Épandeuse pneumatique selon l'une des revendications 1 à 3, **caractérisée en ce que** la pièce façonnée (10) s'étend du côté de sortie jusqu'approximativement au centre de la section transversale du coude (5).

5. Épandeuse pneumatique selon l'une des revendications 1 à 4, **caractérisée en ce que** la section transversale de la pièce façonnée (10) comporte, au moins au niveau de l'extrémité située du côté de sortie du coude (5), un arrondi (11) central avec un guide (12) raccordé à lui des deux côtés au niveau de la paroi interne (9) du coude (5).

6. Épandeuse pneumatique selon la revendication 5, **caractérisée en ce que** les guides (12) s'étendent pour l'essentiel dans le plan radial sur la paroi interne (9) du coude (5).

7. Épandeuse pneumatique selon la revendication 5 ou 6, **caractérisée en ce que** les guides (12) raccordés des deux côtés à l'arrondi (11) possèdent une extension au moins en partie linéaire et/ou coudée à l'inverse de la courbure de l'arrondi (11).

8. Épandeuse pneumatique selon l'une des revendications 5 à 7, **caractérisée en ce que** les guides (12) sont disposés selon un angle compris entre 90° et 180°, notamment selon un angle d'approximativement 120°.

9. Épandeuse pneumatique selon l'une des revendications 5 à 8, **caractérisée en ce que** l'arrondi (11) de la section transversale de la pièce façonnée (10) est convexe.

10. Épandeuse pneumatique selon l'une des revendications 1 à 8, **caractérisée en ce que** la forme de la pièce façonnée (10) se poursuit, en partant de l'extrémité située du côté de sortie du coude (5), pour l'essentiel perpendiculairement à la section transversale située du côté de sortie du coude (5), jusque dans le coude (5) et s'écoule dans le coude (5).

11. Épandeuse pneumatique selon l'une des revendications 5 à 10, **caractérisée en ce qu'**au moins la ligne de sommet de l'arrondi (11) de la section transversale de la pièce façonnée (10) est disposée pour l'essentiel perpendiculairement au tuyau transporteur (4).

12. Épandeuse pneumatique selon l'une des revendications 5 à 11, **caractérisée en ce que** l'arrondi (11) de la pièce façonnée (10) présente un rayon compris entre 20 mm et 50 mm, notamment d'approximativement 35 mm.

13. Épandeuse pneumatique selon l'une des revendications 5 à 12, **caractérisée en ce qu'**une zone de transition entre l'arrondi (11) et les guides (12) de la section transversale de la pièce façonnée (10) un rayon compris entre 10 mm et 30 mm, notamment d'environ 20 mm.

14. Épandeuse pneumatique selon l'une des revendications 1 à 13, **caractérisée en ce que** la pièce façonnée (10) est réalisée de façon fermée au niveau de l'extrémité située du côté de sortie du coude (5).

15. Épandeuse pneumatique selon l'une des revendications 1 à 14, **caractérisée en ce que** la pièce façonnée (10) est fixée de façon amovible, notamment à l'aide de vis (13), différentes pièces façonnées (10) pouvant être insérées dans une conformation correspondante avec différents diamètres- de coupe de différentes dimensions, notamment pour différents diamètres du coude (5).
